# EUROPÄISCHE PATENTSCHRIFT

(11) **EP 0 871 823 B1**
(45) Veröffentlichungstag und Bekanntmachung des Hinweises auf die Patenterteilung: **29.08.2001**
(21) Anmeldenummer: 97950129.3
(22) Anmeldetag: 06.11.1997
(51) Int. Cl.: F16B 5/02, E04F 13/08

(54) **ABSTÜTZSYSTEM MIT BEFESTIGUNGSORGAN**
SUPPORTINGSYSTEM WITH FASTENING ELEMENT
SYSTEME D'APPUI AVEC ORGANE DE FIXATION

(30) Priorität: 14.11.1996 DE 29619809 U
(43) Veröffentlichungstag der Anmeldung: 21.10.1998
(73) Patentinhaber: Eischeid, Karl, 51766 Engelskirchen (DE)
(72) Erfinder: Eischeid, Karl, 51766 Engelskirchen (DE)
(74) Vertreter: Eichler, Peter, Dipl.-Ing.
(86) Internationale Anmeldenummer: EP9706156
(87) Internationale Veröffentlichungsnummer: WO9821490

(56) Entgegenhaltungen:
- EP-A- 0 064 290
- EP-A- 0 243 612
- DE-A- 1 784 453
- DE-U- 29 501 801
- US-A- 4 087 123

## Beschreibung

Die Erfindung bezieht sich auf ein Abstützsystem gemäß den Obergebriff des Anspruchs 7, wie es aus der DE-A-1 784 453 bekannt ist.

Ein Abstützsystem mit den vorgenannten Merkmale ist auch anderweitig allgemein bekannt. Das Bauteil ist dabei eine rechteckige Platte, die von einer Schraubenmutter als Befestigungsorgan beaufschlagt wird. Das Bauteil ist in Längsrichtung gerillt und von dem Befestigungsorgan gegen einen Schenkel eines als Leibungswinkel ausgebildeten Konstruktionteils gedrückt. Der Leibungswinkel hält Fassadenverkleidungsplatten. Hierzu ist in eine Fassadenverkleidungsplatte ein Dübel eingesetzt, in den das Befestigungsorgan eingeschraubt ist. Infolgedessen werden die betreffende Fassadenverkleidungsplatte, der Schenkel des Leibungswinkels und das Bauteil mittels des Befestigungsorgans zusammen verspannt. Dabei greifen die gerillte Abstützfläche des Konstruktionsteils bzw. des Schenkels des Leibungswinkels und die Auflagefläche des Bauteils mit ihren Rippen und Rillen gleich ausgerichtet jeweils ineinander. Infolgedesser können sie in ihrer Längsrichtung verrutschen. Das ist insbesondere bei der Montage unerwünscht, bei der mit dem Konstruktionsteil erhebliche Gewichte verbunden sein können, die möglichst genau positioniert werden sollen. Ein Verrutschen des Bauteils am Konstruktionsteil würde dann dazu führen, daß die Position des von dem Konstruktionsteil gehaltenen Bauteils, also beispielsweise einer schweren, von einem Leibungswinkel gehaltenen Fassadenplatte, nicht genau oder schnell verrutscht ist.

Der Erfindung liegt daher die Aufgabe zugrunde, ein Abstützsystem mit den eingangs genannten Merkmalen so zu verbessern, daß es ohne die Gefahr des Verrutschens an einer gerillten Abstützfläche eines Konstruktionsteils mit einfachen Mitteln in einer einmal vorbestimmten Montagestellung angebracht werden kann und die dabei eingenommene Stellung auch dauerhaft beibehält.

Diese Aufgabe wird dadurch gelöst, daß die Abstützfläche und/oder die Auflagefläche mindestens eine eingedrückte Vertiefung aufweist, der den Rillenquerschnitt verengende, durch das Eindrücken erzeugte Materialanhäufungen benachbart sind.

Für die Erfindung ist das Vorhandensein eingedrückter Vertiefungen von Bedeutung. Diese haben durch das Eindrücken erzeugte Materialanhäufungen zur Folge, welche den Rillenquerschnitt verengen. Diese Verengung erfolgt nur in unmittelbarer Nachbarschaft der eingedrückten Vertiefung und hat zur Folge, daß die Halterippen der Abstützfläche hier aufliegen. Bei entsprechendem Druck des Befestigungsorgans auf das Bauteil krallen sich die Halterippen des Konstruktionsteils in die Materialanhäufungen, welche Haltepunkte darstellen. Vorstehendes gilt, wenn lediglich das Bauteil Materialanhäufungen erzeugende eingedrückte Vertiefungen aufweist. Ein entsprechender Halteeffekt ergibt sich aber auch, wenn statt des Bauteils nur das Konstruktionsteil Materialanhäufungen ausbildende eingedrückte Vertiefungen hat, oder wenn sowohl das Bauteil, als auch das Konstruktionsteil Materialanhäufungen bildende eingedrückte Vertiefungen aufweisen. In allen Fällen sind die Materialanhäufungen zusätzliche Reibungs- und Haltepunkte für die jeweils eingreifende Rippe bzw. Halterippe.

Um eine gleichmäßige Verteilung der Reibungspunkte und damit eine höhere Sicherheit gegen Verrutschen des Bauteils zu erreichen, kann dieses so ausgebildet werden, daß mehrere eingedrückte Vertiefungen gleichmäßig über die Abstützfläche und/oder die Auflagefläche verteilt sind. Dabei können die Vertiefungen alle gleich sein. Es können aber auch unterschiedliche Vertiefungen ausgebildet werden, was beispielsweise dann sinnvoll ist, wenn an unterschiedlichen Stellen unterschiedlich starke Reibungsverbesserungen erreicht werden sollen.

Das Bauteil kann so ausgebildet werden, daß als Vertiefungen Rillen eingedrückt sind. Zur Herstellung der Rillen kommt beispielsweise ein Druckmesser zum Einsatz, mit dem alle Rippen und Rillen der Auflagefläche und/oder der Abstützfläche erfaßt werden.

Für eine gleichmäßige Verteilung der Materialanhäufungen in Bezug auf den Rillenquerschnitt ist es vorteilhaft, das Bauteil so auszubilden, daß die Vertiefungen als Querrillen ausgebildet sind.

Eine besonders einfache Ausgestaltung des Bauteils ergibt sich, wenn die Vertiefungen ausschließlich in der Auflagefläche oder in der Abstützfläche vorhanden sind. Es ist dann möglich, mit dem Bauteil zusammenwirkende Konstruktionsteile in herkömmlicher Weise auszubilden, also ungeändert bzw. umgekehrt.

Der Herstellungsaufwand ist dann besonders gering, wenn der Abstand der Vertiefungen ein Vielfaches des gegenseitigen Abstands der Halterillen der Abstützfläche oder der Rillen in der Auflagefläche beträgt. Es brauchen dann nur diesem Abstand entsprechend Eindrückwerkzeuge eingesetzt zu werden. Die insgesamt aufzubringende Eindrückkraft ist entsprechend gering.

Eine besonders große Sicherheit gegen Verrutschen wird dadurch erreicht, daß der Abstand der Vertiefungen etwa gleich dem gegenseitigen Abstand der Halterillen der Abstützfläche ist. Der Abstand der Rillen der Auflagefläche ist dann so klein wie möglich und die Sicherheit gegen Verrutschen zwischen dem Bauteil und dem Konstruktionsteil so groß wie möglich.

Abstützsystem kann des weiteren so ausgebildet werden, daß es als das Befestigungsorgan ein Schraubgewindeteil abstützt, das mit einer bedarfsweise eine Hinterschneidung aufweisenden Bohrung einer Leibungsverkleidungsplatte zusammenwirkt. Mit diesem Bauteil kann eine sehr sichere Befestigung der Leibungsverkleidungsplatte erreicht werden. Die Hinterschneidung kann beispielsweise als zu der Bohrung der Leibungsverkleidungsplatte angeordnete Querbohrung ausgebildet sein, welche die Bohrung durchsetzt. In diese Querbohrung kann ein Falldorn eingeführt werden, der ein Loch des Schraubgewindeteils durchsetzt und damit verhindert, daß das Schraubgewindeteil aus der Bohrung der Leibungsverkleidungsplatte herausgezogen wird, wenn das Schraubgewindeteil infolge des Anziehens einer Befestigungsmutter axial belastet wird.

Eine vorteilhafte Weiterbildung des Abstützsystems ergibt sich, wenn das Gewindeteil eine Schraubenmutter oder eine Sperrzahnmutter ist, die auf einen Gewindestift oder auf einen Bolzen aufgeschraubt ist, oder eine Schraube, und bzw. oder daß der Gewindestift oder der Bolzen oder die Schraube mit der Hinterschneidung mittels eines Kragendübels zusammenwirkt, der an Spreizlappen angeordnete Vorsprünge hat, die von dem Gewindestift oder dem Bolzen bzw. der schraube in der Hinterschneidung gesichert sind. Es kann eine sehr schnelle und unkomplizierte Handhabung einer Leibungswinkelbefestigung erreicht werden. Die Schraubenmutter oder die Sperrzahnmutter kann schnell auf den Gewindestift oder auf den Bolzen aufgeschraubt werden und die Schraube ermöglicht ebenfalls eine schnelle Leibungswinkelbefestigung. Wenn eine Sperrzahnmutter eingesetzt wird, ist eine Unterlegscheibe nicht erforderlich. Ein Mitdrehen des Kragendübels beim Einschrauben des Gewindestiftes, des Bolzens oder der Schraube kann dadurch verhindert werden, daß der Kragen des Dübels formschlüssig im Bauteil sitzt, welches infolge der speziell gerillten Auflagefläche und/oder der speziell gerillten Abstützfläche zu einem schnellen Formschluß zwischen dem Bauteil und dem Konstruktionsteil führt, so daß auch große und damit schwere Leibungsverkleidungsplatten überraschend schnell und sicher montiert werden können. Die für Leibungsverkleidungsplatten bedeutsame große Verschiebemöglichkeit im Rahmen eines Langloches des Leibungswinkels wird dadurch nicht beeinträchtigt.

Das Bauteil kann so weitergebildet werden, daß die Tiefe der Vertiefung gleich der Tiefe der Rillen und/oder der Halterillen ist. Es ergibt sich eine optimale Verteilung der Materialanhäufungen, ohne daß deren Sicherungswirkung beeinträchtigt wird, weil die Materialanhäufungen zu klein oder zu groß sind.

Die Erfindung wird anhand eines in der Zeichnung dargestellten Ausführungsbeispiels erläutert. Es zeigt:
- Fig.1: eine Innenansicht eines Teils einer Fassadenverkleidung mit Leibungswinkel-Halterung,
- Fig.2: einen Querschnitt durch die Befestigungsstelle der Fig.1,
- Fig.3: eine Teilaufsicht auf eine gerillte Auflagefläche des Bauteils im Bereich einer eingedrückten Vertiefung, die als Querrille ausgebildet ist,
- Fig.4: eine Teilansicht auf die Darstellung der Fig.3 in Richtung A, und
- Fig.5: einen Teilquerschnitt durch ein Bauteil im Bereich einer gerillten Auflagefläche mit eingedrückter Vertiefung, wobei das Bauteil mit einem Konstruktionsteil zusammengebaut ist.

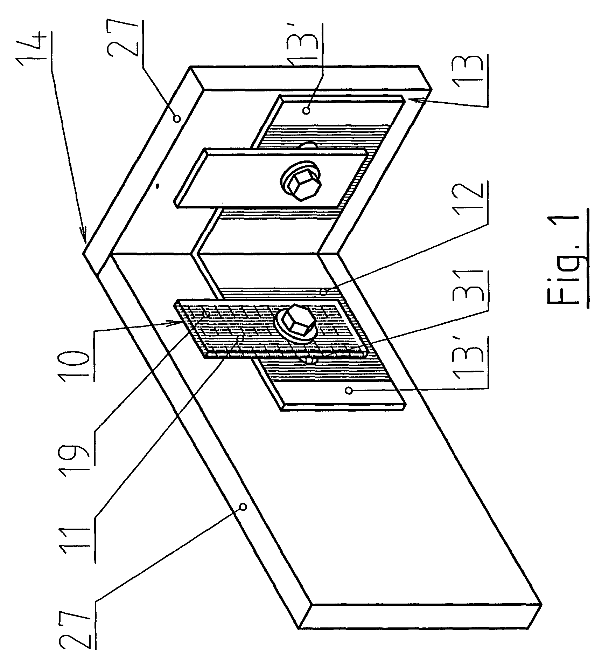

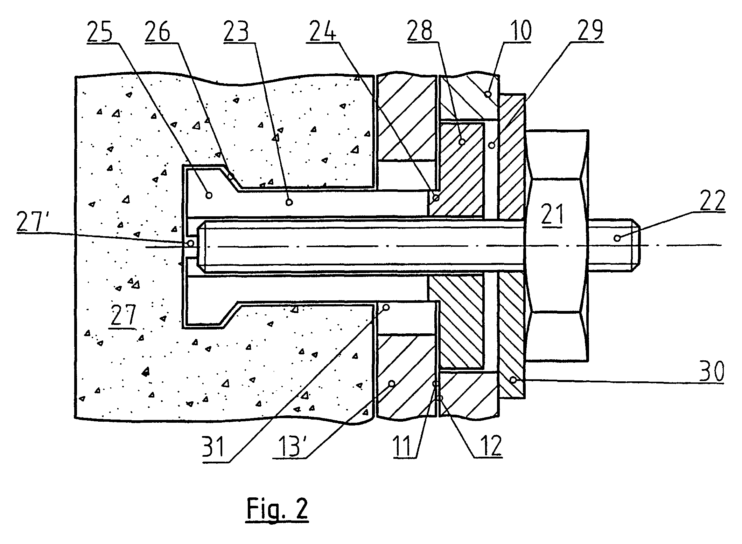

Fig.1 zeigt in schematischer Darstellung eine Innenansicht einer Fassadenverkleidung, bei der zwei Leibungsverkleidungsplatten 27 im Winkel zueinander angeordnet sind. Die rechte Leibungsverkleidungsplatte 27 soll beispielsweise eine vertikale Leibung verkleiden und wird dazu von der linken Leibungsverkleidungsplatte 27 gehalten. Die mechanische Verbindung beider Leibungsverkleidungsplatten 27 erfolgt über einen Leibungswinkel 13, dessen beide Winkelschenkel 13' jeweils an einer der Leibungsverkleidungsplatten 27 befestigt sind. Die Befestigung erfolgt verdeckt, das heißt die Befestigungsmittel sind von der Fassadenaußenseite nicht zu sehen. Hierzu besitzen die Leibungsverkleidungsplatten 27 gemäß Fig.2 Sackbohrungen 27' mit Hinterschneidungen 26. In die Sackbohrungen 27' ist je ein Kragendübel eingesetzt, in den ein Gewindestift 22 eingeschraubt ist. Der Kragendübel 24 ist praktisch über seine gesamte Länge bis auf den Bereich des Kragens 28 geschlitzt, so daß Spreizlappen 23 entstehen, die zusammengedrückt werden können, um so den Kragendübel 24 in die Sackbohrung 27' hineinstecken zu können, obwohl die Spreizlappen 23 Vorsprünge 25 aufweisen, welche den Eingangsdurchmesser der Sackbohrung 27' übersteigen, wenn die Spreizlappen 23 unverformt sind. Die Sackbohrung 27' hat eine Hinterschneidung 26, die rundum ausgebildet ist und in ihrer Form auf die Vorsprünge 25 der Spreizlappen 23 abgestimmt ist. Wenn nun bei der Herstellung der Verbindung ein Gewindestift 22 in den Kragendübel 24 eingeschraubt wird, spreizt dieser Gewindestift 22 die Spreizlappen 23 und die Vorsprünge 25 gelangen in die Hinterschneidung 26 der Leibungsverkleidungsplatte 27. In dieser Stellung sind die Spreizlappen 23 gegen Verformungen bzw. Rückstellungen derart gesichert, daß der Kragendübel 24 nicht mehr herausgezogen werden kann. Denn die Länge des Gewindestifts 22 ist so bemessen, daß dieser fast bis zum Boden der Sackbohrung 27' eingeschraubt wird und infolgedessen die Vorsprünge 25 in ihrer Lage sichert. Mit Hilfe des Kragendübels 24 wird die Leibungsverkleidungsplatte 27 gegen den Winkelschenkel 13' des Leibungswinkels 13 gezogen, wenn auf den Gewindestift 22 eine Mutter 21 aufgeschraubt wird. Die Mutter 21 drückt über eine Unterlegscheibe 30 auf ein Bauteil 10, das seinerseits auf den Winkelschenkel 13' drückt. Dementsprechend erfolgt ein festes Anpressen zwischen der Leibungsverkleidungsplatte 27 und dem Winkelschenkel 13' entsprechend der Spannkraft, die durch die Schraubenmutter 21 aufgebracht wird. Statt der Anwendung einer Schraubenmutter 21 und eines Gewindestifts 22 ist auch die Anwendung einer Schraube möglich, deren Kopf beim Einschrauben des Schraubenschafts in den Kragendübel 24 auf die Unterlegscheibe 30 drückt. Letztere kann entfallen, wenn eine Sperrzahnmutter oder Sperrzahnschraube angewendet wird. Auch andere Befestigungsorgane können eingesetzt werden. Anstelle des Leibungswinkels 13 können grundsätzlich auch andere Konstruktionsteile zum Einsatz kommen, wenn dies bei der jeweiligen Tragkonstruktion zweckmäßig ist. Anstelle der Leibungsverkleidungsplatten können auch andere zu befestigende Teile treten.

Das Bauteil 10 ist mit einer Ausnehmung 29 versehen, in der der Kragen 28 des Kragendübels 24 angeordnet ist. Der Kragen 28 ist unrund, ebenso wie die Ausnehmung 29, damit ein Mitdrehen des Dübels 24 beim Einschrauben des Gewindestifts 22 verhindert werden kann. Beispielsweise verhindert die Ausbildung des Kragens 28 als Sechskant in einer sechskantigen Ausnehmung 29 das Mitdrehen des Kragendübels 24, wenn die Mutter 21 festgeschraubt wird. Dabei ist allerdings Voraussetzung, daß das Bauteil 10 mit seiner Auflagefläche 11 an der Abstützfläche 12 des Winkelschenkels 13' festliegt. Ein Mitdrehen wird hier verhindert, indem Rippen 15 und Rillen 16 der Auflagefläche 11 in Halterillen 17 und Halterippen 18 der Abstützfläche 12 eingreifen. Bei diesem Festlegen spielt ausserdem eine Rolle, daß der Kragendübel 24 ein Langloch 31 oder ein Rundloch des Leibungswinkels 13 durchgreift, mit dem für eine Ausrichtung in der Richtung des Langlochs oder in den Richtungen des mit entsprechenden Toleranzen versehenen Rundlochs gesorgt werden kann, um entsprechend dichte und genaue Abschlüsse der Leibungsverkleidungsplatten 27 zu erhalten. Fig.2 zeigt in Bezug auf Fig.1 einen Vertikalschnitt, aus dem ersichtlich ist, daß das Langloch 31 auch quer zu seiner Längserstreckung erhebliche Toleranzen hat. Diese Toleranzen machen es erforderlich, daß das Bauteil 10 möglichst schnell fest sitzen soll, also auch ohne größere Betätigungskräfte für die Schraubenmutter 21. Dabei ist zu bedenken, daß auch die Ausrichtung von Hand erfolgt, so daß ein Verrutschen des Bauteils 10 am Leibungswinkel 13 äußerst unerwünscht ist, auch, wenn dieses Verrutschen nur in geringem Umfang zu befürchten sein sollte.

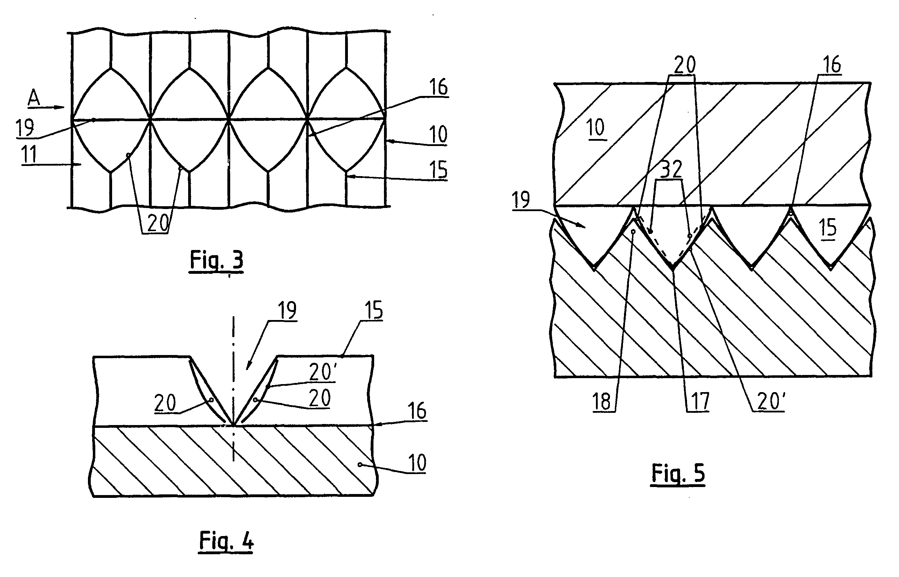

Die Auflagefläche 11 und/oder die Abstützfläche 12 der vorgenannten Teile sind nun daher mit Mitteln ausgebildet, welche ein Verrutschen des Bauteils 10 und des Leibungswinkels 13 relativ zueinander wirksam verhindern. Diese Mittel werden bezüglich ihrer Ausbildung lediglich am Bauteil 10 beschrieben. Diese Mittel sind Vertiefungen 19, welche in die Auflagefläche 11 eingedrückt sind. Fig. 3 zeigt als Aufsicht eine Querrille in den Rillen 16 und Rippen 15 dieser Auflagefläche 11. Die Vertiefung ist im wesentlichen keilförmig, wie Fig.4 im Querschnitt zeigt. Das Eindrücken eines im Querschnitt keilförmigen Werkzeugs in die Rippen 15 hat zur Folge, daß deren Werkstoff verdrängt wird und im wesentlichen in die Rillen 16 gelangt. Das Eindrücken erfolgt so tief, wie die Rillen 16 tief sind. In diesen Rillen 16 entstehen Materialanhäufungen 20, die in Fig.5 schematisch im Querschnitt dargestellt sind. Sie ergeben sich im Vergleich zu den gestrichelten Linien 32, welche die Normalstellung der Flanken der Rippen 15 darstellen. Die Materialanhäufungen 20 sind mit vergleichsweise scharfen Kanten 20' versehen, vgl. Fig.4. Diese scharfen Kanten 20' schneiden sich in die Rippen 18 der Abstützfläche 12 des Konstruktionsteils bzw. des Leibungswinkels 13 ein, wie Fig.5 erkennen läßt. Bei geringen Drücken der Auflagefläche 11 und der Abstützfläche 12 aufeinander ist es daher nicht mehr möglich, die Halterillen 17 und Halterippen 18 relativ zu den Rippen 15 und Rillen 16 der Auflagefläche 11 zu verschieben.

In den Figuren 2 bis 5 wurde lediglich eine einzige Vertiefung 19 als Querrille dargestellt. Die Rillen können aber auch im Winkel zu den Rippen 15 angeordnet sein oder eine bogenartige Struktur haben, sofern hierdurch Materialanhäufungen entstehen, an denen sich die Halterippen 18 festkrallen können. In der Praxis werden mehrere Rillen angewendet, wie es in Fig.1 gestrichelt dargestellt wurde, um die Anzahl der durch Eindrücken erzeugten Materialanhäufungen 20 zu vergrössern. Die entsprechenden Linien sind gestrichelt dargestellt, da sie sich auf der dem Leibungswinkel 13 zugewendeten Fläche des Bauteils 10 befinden. Demgemäß kann der Abstand der Vertiefungen 19 ein Vielfaches des gegenseitigen Abstands der Halterillen 17 der Abstützfläche 12 betragen. Es ist aber auch möglich, den Abstand der Vertiefungen 19 ganz gering zu halten, beispielsweise etwa gleich dem gegenseitigen Abstand der Halterillen 17 der Abstützfläche 12. Es entstehen dann pyramidenähnliche Vorsprünge auf dem Bauteil 10 und/oder auf dem Konstruktionsteil. Dabei ist zu erwarten, daß die Materialanhäufungen zu Erhöhungen führen, die über das Niveau des Bauteils oder des Konstruktionsteils im übrigen hervorstehen, ähnlich wie Schleifkörner über das Schleifband. Der Halteeffekt ist dann besonders ausgeprägt.

Von besonderer Bedeutung ist, daß der Herstellungsaufwand für die Vertiefungen unbedeutend ist. Die in dem Bauteil 10 vorzusehenden Ausnehmungen oder Langlöcher werden üblicherweise gestanzt, insbesondere wenn es sich bei dem Konstruktionsteil um einen Leibungswinkel 13 aus einer Leichtmetallegierung handelt, die in jedem Winkelschenkel 13' mit einem Loch bzw. einem Langloch 31 versehen werden muß. In diesem Fall kann das Stanzwerkzeug so ausgebildet werden, daß die Vertiefungen 19 zugleich mit dem Stanzvorgang für das Langloch 31 hergestellt werden.

## Patentansprüche

1. Abstützsystem bestehend aus einem Bauteil (10), einem Befestigungsorgan (22) und einem konstruktionsteils (13), insbesondere eines Leibungswinkels (13) für Fassadenverkleidungen (14), wobei das Bauteil eine gerillte bzw. gerippte Auflagefläche (11) aufweist, die von dem Befestigungsorgan gegen eine entsprechend gerillte Abstützfläche (12) des konstruktionsteils andrückbar ist, wobei die Rippen (15) und Rillen (16) der Auflagefläche (11) in Halterillen (17) und Halterippen (18) der Abstützfläche (12) eingreifen, **dadurch gekennzeichnet,** daß die Abstützfläche (12) und/oder die Auflagefläche (11) mindestens eine eingedrückte Vertiefung (19) aufweist, der den Rillenquerschnitt verengende, durch das Eindrücken erzeugte Materialanhäufungen (20) benachbart sind.

2. Abstützsystem nach Anspruch 1, **dadurch gekennzeichnet,** daß mehrere eingedrückte Vertiefungen (19) gleichmäßig über die Abstützfläche (12) und/oder die Auflagefläche (11) verteilt sind.

3. Abstützsystem nach Anspruch 1 oder 2, **dadurch gekennzeichnet,** daß als Vertiefungen (19) Rillen eingedrückt sind.

4. Abstützsystem nach Anspruch 3, **dadurch gekennzeichnet,** daß die Vertiefungen (19) als Querrillen ausgebildet sind.

5. Abstützsystem nach einem oder mehreren der Ansprüche 1 bis 4, **dadurch gekennzeichnet,** daß die Vertiefungen (19) ausschließlich in der Auflagefläche (11) oder in der Abstützfläche (12) vorhanden sind.

6. Abstützsystem nach einem oder mehreren der Ansprüche 1 bis 5, **dadurch gekennzeichnet,** daß der Abstand der Vertiefungen (19) ein Vielfaches des gegenseitigen Abstands der Halterillen (17) der Abstützfläche (12) oder der Rillen (16) in der Auflagefläche (11) beträgt.

7. Abstützsystem nach einem oder mehreren der Ansprüche 1 bis 5, **dadurch gekennzeichnet,** daß der Abstand der Vertiefungen (19) etwa gleich dem gegenseitigen Abstand der Halterillen (17) der Abstützfläche (12) ist.

8. Abstützsystem nach einem oder mehreren der Ansprüche 1 bis 7, **dadurch gekennzeichnet,** daß es als das Befestigungsorgan ein Schraubgewindeteil abstützt, das mit einer bedarfsweise eine Hinterschneidung aufweisenden Bohrung einer Leibungsverkleidungsplatte (27) zusammenwirkt.

9. Abstützsystem nach Anspruch 8, **dadurch gekennzeichnet,** daß das Schraubgewindeteil eine Schraubenmutter (21) oder eine Sperrzahnmutter ist, die auf einen Gewindestift (22) oder auf ein Bolzen aufgeschraubt ist, oder eine Schraube, und bzw. oder daß der Gewindestift (22) oder der Bolzen bzw. die Schraube mit einer Hinterschneidung (26) der Bohrung mittels eines Kragendübels (24) zusammenwirkt, der an Spreizlappen (23) angeordnete Vorsprünge (25) hat, die von dem Gewindestift (22) oder dem Bolzen oder der Schraube in der Hinterschneidung gesichert sind.

10. Abstützsystem nach einem oder mehreren der Ansprüche 1 bis 9, **dadurch gekennzeichnet,** daß die Tiefe der Vertiefung (19) gleich der Tiefe der Rillen (16) und/oder der Halterillen (17) ist.

## Claims

1. Support system consisting of a component (10), a fastening element (22) and a construction part (13), in particular a soffit angle (13) for facade claddings (14), wherein the component comprises a grooved or ribbed contact surface (11) which can be pressed by the fastening element against a correspondingly grooved support surface (12) of the construction part, wherein the ribs (15) and grooves (16) of the contact surface (11) engage in holding grooves (17) and holding ribs (18) of the support surface (12), **characterised in that** the support surface (12) and/or the contact surface (11) comprises at least one pressed-in recess (19) which is adjoined by accumulations of material (20) narrowing the groove cross-section and produced by the pressing-in process.

2. Support system according to claim 1, **characterised in that** a plurality of pressed-in recesses (19) are distributed evenly over the support surface (12) and/or the contact surface (11).

3. Support system according to claim 1 or 2, **characterised in that** grooves are pressed in as the recesses (19).

4. Support system according to claim 3, **characterised in that** the recesses (19) are formed as transverse grooves.

5. Support system according to one or more of claims 1 to 4, **characterised in that** the recesses (19) are provided exclusively in the contact surface (11) or in the support surface (12).

6. Support system according to one or more of claims 1 to 5, **characterised in that** the spacing of the recesses (19) amounts to a multiple of the mutual spacing of the holding grooves (17) of the support surface (12) or of the grooves (16) in the contact surface (11).

7. Support system according to one or more of claims 1 to 5, **characterised in that** the spacing of the recesses (19) is approximately equal to the mutual spacing of the holding grooves (17) of the support surface (12).

8. Support system according to one or more of claims 1 to 7, **characterised in that**, as the fastening element, it supports a screw thread part which cooperates with a bore, which comprises an undercut if necessary, in a soffit cladding plate (27).

9. Support system according to claim 8, **characterised in that** the screw thread part is a screw nut (21) or a self-locking nut which is screwed on a threaded pin (22) or on a bolt, or is a screw, and/or that the threaded pin (22) or the bolt or screw cooperates with an undercut (26) in the bore by means of a collared plug (24) which has projections (25) disposed on spreading tabs (23), which projections are secured in the undercut by the threaded pin (22) or the bolt or the screw.

10. Support system according to one or more of claims 1 to 9, **characterised in that** the depth of the recess (19) is the same as the depth of the grooves (16) and/or holding grooves (17).

## Revendications

1. Système d'appui composé d'un élément de construction (10), d'un organe de fixation (22) et d'une pièce de construction (13), en particulier une équerre d'embrasure (13) pour des revêtements de façades (14), étant précisé que l'élément de construction présente une surface d'application rainurée ou nervurée (11) qui est apte à être pressée par l'organe de fixation contre une surface d'appui (12), rainurée en conséquence, de la pièce de construction, et que les nervures (15) et les rainures (16) de la surface d'application (11) viennent en prise avec des rainures de fixation (17) et des nervures de fixation (18) de la surface d'appui (12), **caractérisé en ce que** la surface d'appui (12) et/ou la surface d'application (11) présentent au moins un creux (19) obtenu par enfoncement, près duquel se trouvent des accumulations de matière (20) qui sont obtenues par enfoncement et qui rétrécissent la section transversale des rainures.

2. Système d'appui selon la revendication 1, **caractérisé en ce que** plusieurs creux (19) obtenus par enfoncement sont répartis régulièrement sur la surface d'appui (12) et/ou sur la surface d'application (11).

3. Système d'appui selon la revendication 1 ou 2, **caractérisé en ce qu**'il est prévu comme creux (19) des rainures réalisées par enfoncement.

4. Système d'appui selon la revendication 3, **caractérisé en ce que** les creux (19) sont conçus comme des rainures transversales.

5. Système d'appui selon l'une au moins des revendications 1 à 4, **caractérisé en ce que** les creux (19) sont prévus uniquement dans la surface d'application (11) ou dans la surface d'appui (12).

6. Système d'appui selon l'une au moins des revendications 1 à 5, **caractérisé en ce que** l'écartement des creux (19) est plusieurs fois supérieur à l'écartement des rainures de fixation (17) de la surface d'appui (12) ou des rainures (16) de la surface d'application (11).

7. Système d'appui selon l'une au moins des revendications 1 à 5, **caractérisé en ce que** l'écartement des creux (19) est à peu près égal à l'écartement des rainures de fixation (17) de la surface d'appui (12).

8. Système d'appui selon l'une au moins des revendications 1 à 7, **caractérisé en ce qu**'il supporte comme organe de fixation un élément fileté qui coopère avec un perçage, éventuellement contre-dépouillé, d'une plaque de revêtement d'embrasure (27).

9. Système d'appui selon la revendication 8, **caractérisé en ce que** l'élément fileté est constitué par un écrou (21) ou un écrou à cliquet qui est vissé sur une tige filetée (22) ou sur un boulon, ou par une vis, et/ou en ce que la tige filetée (22) ou le boulon ou la vis coopère avec une contre-dépouille (26) du perçage à l'aide d'une cheville à collerette (24) pourvue de saillies (25) qui sont disposées sur des pattes d'écartement (23) et qui sont bloquées dans la contre-dépouille par la tige filetée (22) ou le boulon ou la vis.

10. Système d'appui selon l'une au moins des revendications 1 à 9, **caractérisé en ce que** la profondeur du creux (19) est égale à la profondeur des rainures (16) et/ou des rainures de fixation (17).
